# EUROPÄISCHE PATENTSCHRIFT

(11) **EP 1 899 561 B1**
(45) Veröffentlichungstag und Bekanntmachung des Hinweises auf die Patenterteilung: **28.07.2010**
(21) Anmeldenummer: 06755097.0
(22) Anmeldetag: 09.05.2006
(51) Int. Cl.: E05B 65/20

(54) **SYSTEM FÜR EINE SCHLÜSSELLOSE AKTIVIERUNG EINER SCHLIESSVORRICHTUNG EINES KRAFTFAHRZEUGES**
SYSTEM FOR A KEYLESS ACTIVATION OF A LOCKING DEVICE OF A MOTOR VEHICLE
SYSTEME PERMETTANT D'ACTIVER UN DISPOSITIF DE FERMETURE D'UN VEHICULE AUTOMOBILE SANS CLE

(30) Priorität: 27.06.2005 DE 102005030081
(43) Veröffentlichungstag der Anmeldung: 19.03.2008
(73) Patentinhaber: Huf Hülsbeck & Fürst GmbH & Co. KG, 42551 Velbert (DE)
(72) Erfinder: FALKENBERG, Andreas, 42579 Heiligenhaus (DE); MÜLLER, Ulrich, 42549 Velbert (DE)
(74) Vertreter: Vogel, Andreas
(86) Internationale Anmeldenummer: PCT/EP2006/062155
(87) Internationale Veröffentlichungsnummer: WO 2007/000370

(56) Entgegenhaltungen:
- EP-A- 0 846 822
- EP-A- 1 363 249
- WO-A-2004/077721
- DE-A1- 3 900 494
- GB-A- 2 329 668
- US-A1- 2003 102 957
- US-A1- 2004 006 707
- US-A1- 2004 128 065
- US-A1- 2004 230 348

## Beschreibung

Die Erfindung betrifft ein System für eine schlüssellose Aktivierung einer Schließvorrichtung eines Kraftfahrzeuges, mit einem mobilen Identifikationsgeber, der eine Dateneinheit mit gespeicherten Identifikationsdaten und eine Sende- und Empfangseinheit aufweist, die mit einer kraftfahrzeugseitigen Sende- und Empfangseinheit in Kommunikation bringbar ist.

Schlüssellose Schließsysteme werden bei zahlreichen Anwendungen bei Kraftfahrzeugen zur Erhöhung des Bedienerkomforts eingesetzt. Herkömmlich werden als Fembedienungssysteme Infrarotsysteme oder Funksysteme verwendet, bei denen der berechtigte Benutzer aktiv den Identifikationsgeber betätigt, um ein Signal zur Basisstation, beispielsweise an eine im Kraftfahrzeug vorgesehene Empfangseinheit zum Öffnen des Fahrzeuges zu übermitteln. Die in der Dateneinheit enthaltenden Identifikationsdaten können im Rahmen bekannter Zugangskontrollverfahren auch neu generiert werden.

Zusehens eine Marktverbreitung finden elektronische Schlleßsysteme für Kraftfahrzeuge, die neben der beschriebenen bedienungsabhängigen Funktionalität zusätzlich mit einer bedingungsunabhängigen Funktionalität, der sogenannten "keyless-go"- oder "keyless-entry"-Funktionalität, ausgestattet sind. Ausschlaggebend sind die Komfortvorteile für die Bedienung durch den Benutzer. Im Gegensatz zur konventionellen Fernbedienung ist bei der keyless-entry-Funktionalltät keine Bedienung des Identifikationsgebers zur Öffnung einer Fahrzeugtür oder des Fahrzeugkofferraumes notwendig. Vielmehr wird bei der Betätigung des Türgriffes an der Autotür eine Kommunikation zwischen dem Kraftfahrzeug und dem Identifikationsgeber gestartet und bei positiver Authentifikation die elektrische Türöffnung des Kraftfahrzeuges aktiviert. Das bedeutet, dass der einen gültigen Identifikationsgeber mitführende Benutzer sein Kraftfahrzeug öffnen kann, ohne aktiv den Identifikationsgeber betätigen zu müssen. Beispielsweise ist ein Zugangskontrollverfahren bekannt, dass bei Betätigung des Türgriffes ein Sendeimpuls über eine induktive Antenne zum Identifikationsgeber übertragen wird. Der Identifikationsgeber wird daraufhin geweckt und sendet ein Funksignal der kraftfahrseitigen Sende-/Empfangseinheit, die dieses Signal vom Steuergerät für die Zugangsberechtigung weiterleitet. Wird hier der richtige Code erkannt, so wird die elektrische Türöffnung durch entsprechende Ansteuerung der Tür-Steuergeräte aktiviert. Dasselbe kann sich bei einer Türschließung durch Berührung des Türgriffes abspielen.

Für die keyless-go-Funktionalität wird ein fahrzeugseitiges Steuergerät über einen Startschalter im Ganghebel oder im Cockpit geweckt und sendet anschließend ein Impuls zum Identifikationsgeber, der sich innerhalb des Fahrzeuges befindet. Der Identifkationsgeber sendet ein Funksignal zurück. Bei richtiger Codeerkennung startet anschließend der Motor des Kraftfahrzeuges über das zentrale Steuergerät.

Weitere schlüssellos arbeitende Systeme zur Aktivierung einer Schließvorrichtung eines Kraftfahrzeuges sind beispielsweise in der DE 196 17 038 C2 oder in der DE 103 31 440 A1 offenbart.

Des Weiteren ist aus der US 2004/230348 A1 eine schlüssellose Schließvorrichtung bekannt, die einen Identifikationsgeber und eine herausnehmbare Speichereinheit umfasst.

Auch die Entgegenhaltung DE 39 00 494 A1 offenbart eine Schließvorrichtung mit einem Identifikationsgeber und lediglich einer herausnehmbaren Speichereinheit.

Die EP 1 363 249 A1 offenbart eine Schließvorrichtung zur Aktivierung mehrerer Schließsysteme, die nebst einer herausnehmbaren Speichereinheit eine integrierte Speichereinheit aufweist, die allerdings keine ID-Daten erfasst, wobei die Datenkommunlkation zur Überprüfung der Identifikationsdaten eindirektional in Richtung zum Fahrzeug stattfindet.

In der DE 101 06 956 A1 ist ebenfalls eine schlüssellose Schließvorrichtung mit Speicherbausteinen offenbart, jedoch ohne einer festen Dateneinheit mit gespeicherten Identifikationsdaten als auch einer austauschbaren Speichereinheit mit allgemeinen Daten.

Ferner sind Schließsysteme bekannt, bei denen der Identifikationsgeber neben einem elektronischen Schlüssel zusätzlich einen mechanischen Schlüssel aufweist, welches beispielsweise in der DE 199 62 976 C1 oder in der EP 0 846 822 A beschrieben ist.

Es ist Aufgabe der vorliegenden Erfindung ein System für eine schlüssellose Aktivierung einer Schließvorrichtung eines Kraftfahrzeuges zu schaffen, welches eine größere Funktionalität aufweist und einfach gestaltet ist, wobei gleichzeitig dem Benutzer ein komfortables System bereitgestellt wird.

Zur Lösung dieser Aufgabe wird ein System mit dem Merkmalen des Anspruches 1 vorgeschlagen. In den abhängigen Ansprüchen sind bevorzugte Weiterbildungen ausgeführt.

Dazu ist erfindungsgemäß vorgesehen, dass der Identifikationsgeber eine Aufnahme aufweist, in der eine austauschbare Speichereinheit angeordnet ist. In einer bevorzugten Ausführungsform der Erfindung können in der Speichereinheit Daten zur Navigation, Musikdaten, persönliche Fahrereinstellungsdeten, Fahrzeugzustandsdaten sowie allgemeine Daten gespeichert sein. Besonders vorteilhaft ist, dass das System für eine schlüssellose Aktivierung einer Schließvorrichtung in seiner Funktionalität durch die vorliegende Erfindung erheblich erweitert wird. Der Benutzer kann die Speichereinheit aus dem Identifikationsgeber jederzeit entnehmen und beispielsweise mit einem Computer in Datenkommunikation bringen. Die Speichereinheit ist vorzugsweise in eine Schnittstelle des Computers einbringbar, so dass die Daten aus der Speichereinheit herausgelesen werden können oder neue Daten in der Speichereinheit gespeichert werden können. Bei den Daten kann es sich beispielsweise um Navigationsdaten, Insbesondere Kartenmaterial handeln, dass mittels der auswechselbaren Speichereinheit dem Navigationssystem übermittelt werden kann. Der Benutzer kann in einer möglichen Ausführungsform der Erfindung der Speichereinheit die Zieldaten zum Beispiel im Büro übermitteln. Befindet sich der Benutzer anschließend im Fahrzeug, erfolgt ein Datentransfer zum Navigationssystem, so dass das Reiseziel somit automatisch eingestellt ist und das Leitsystem starten kann. Eine manuelle Eingabe der betreffenden Daten in das Navigationssystem ist somit nicht mehr erforderlich, wodurch sich der Komfort für den Benutzer erheblich verbessern lässt.

Die im Fahrzeug sich befindende Speichereinheit kann ferner mit dem Diagnosesystem des Kraftfahrzeuges in Datenkommunikation stehen. Zum einen ist es denkbar, dass die Daten des Fehlerspeichers des Diagnosesystems der auswechselbaren Speichereinheit übertragen werden. Ebenfalls besteht in einer weiteren Ausführungsform die Möglichkeit, dass die Speichereinheit selbst der Fehlerspeicher des Diagnosesystems ist. In beiden beschriebenen Fällen ist es nicht mehr notwendig, mit dem etwaig defekten Fahrzeug zur Werkstatt zu fahren, wo eine Steuergerät-Fehlerauslese über einen im Stand der Technik bekannten, fahrzeugseitig angeordneten sechszehnpoligen Stecker erfolgt. Bei der vorliegenden Erfindung kann der Benutzer des Fahrzeugs die Fehler aus der Speichereinheit zum Beispiel in seinem Computer auslesen, die er anschließend vorab über das Internet zur Werkstatt senden kann. Ist lediglich ein Update oder eine Softwareänderung notwendig, beispielsweise eine Änderung eines Kennfeldes des Motorsteuergerätes, kann das Update ,die neue Software oder eine abgeänderte Software über die Speichereinheit zum Diagnosesystem übertragen werden.

In einer weiteren möglichen Ausführungsform der Erfindung können in der Speichereinheit Musikdaten (MP3), Filme, ect. gespeichert sein, die an ein im Fahrzeug angeordnetes Multimediagerät übertragen werden können. In einer ebenfalls denkbaren Alternative können Daten eines Terminkalenders in der Speichereinheit enthalten sein, die mit einem Organizersystem im Fahrzeug abgeglichen werden können. Ein weiterer Anwendungsbereich des erfindungsgemäßen Systems umfasst eine Fahrtenschreiberfunktion. In der Speichereinheit wird die Zeit gespeichert, wann das Kraftfahrzeug aufgeschlossen und wann das Kraftfahrzeug wieder zugeschlossen worden ist. Außerdem kann der Kilometerstandzähler zusammen mit dem Datum gespeichert werden. Anschließend können die Daten aus der Speichereinheit ausgelesen und in einem Computer übertragen werden, um zum Beispiel eine exakte Reisekostenabrechnung mit Fahrzeiten, Datum, genaue Uhrzeit und gefahrene Kilometer zu erstellen. Ferner kann es sinnvoll sein, persönliche Einstellungsdaten für den Betrieb des Kraftfahrzeuges in der Speichereinheit zu speichern. Darunter ist zu verstehen, dass die für den jeweiligen Fahrer individuellen Einstellungen des Kraftfahrzeugs abgespeichert werden können. Es kann sich dabei um die Fahrersitzeinstellung, die Beleuchtung, das Armaturenbrett, die Innen- und Außenspiegeleinstellung einschließlich Neigung sowie einschließlich der Klimaanlage beziehungsweise Heizung und Lüftung handeln. Sind diese für den jeweiligen Benutzer optimalen Daten in der Speichereinheit gespeichert, werden beim Öffnen der Autotür diese Daten abgerufen und die entsprechenden Einstellungen im Kraftfahrzeug automatisch vorgenommen. Vorzugsweise ist das System oder der Identifikationsgeber mit einer entsprechenden Software ausgestaltet, die für die oben geschriebenen Ausführungsbeispiele einer Datenübertragung zuständig sind.

Die Datenkommunikation der Speichereinheit mit der fahrzeugseitigen Einheit, bei der es vorzugsweise um eine bidirektionale Kommunikation handelt, kann optisch, induktiv, mittels Funk oder mittels elektrischen Kontakts erfolgen. Hierbei ist es vorteilhaft, dass die Speichereinheit in Verbindung mit der identifikationsgeberseitigen Sende- und Empfangseinrichtung steht. Über die Sende- und Empfangseinrichtung werden die betreffenden Daten kabellos an die fahrzeugseitige Einheit übermittelt und/oder umgekehrt. Ebenfalls besteht die Möglichkeit, dass die Speichereinheit in eine entsprechende Schnittstelle der fahrzeugseitigen Einheit geführt wird, und von dort aus die Übertragung der Daten in und/oder aus der Speichereinheit erfolgt.

Die vorliegende Erfindung ist sowohl für einen Identifikationsgeber mit einer aktiven/passiven keyless-entry-Funktion als auch mit einer keyless-go-Funktion anwendbar. Anstelle eines Notschlüssels, der in dem keyless-go Identifikationsgeber angeordnet sein kann, ist die Aufnahme für die Speichereinheit vorgesehen. Selbstverständlich kann der Identifikationsgeber neben dem Notschlüssel zusätzlich eine Aufnahme für die Speichereinheit aufweisen. In einer bevorzugten Ausführungsform der Erfindung weist der Identifikationsgeber ein Gehäuse auf, das vorteilhafterweise aus Spritzgussteil aus Kunststoff besteht, wobei die Aufnahme schlitzförmig im Gehäuse ausgeführt ist, so dass zumindest teilweise die Speichereinheit in der Aufnahme eingeschoben ist. Damit die Speichereinheit aus der Aufnahme sich nicht lösen kann, weist die Aufnahme Haltemittel auf, die eine Arretierungseinheit umfassen können. In einer möglichen Ausführungsform des Systems kann der Benutzer den Speicher in die schlitzförmige Aufnahme hineinschieben, wobei die Speichereinheit in einer bestimmten Einschiebtiefe in der Aufnahme einrastet. Ein Lösen der Speichereinheit kann dadurch bewirkt werden, dass der Benutzer leicht auf die teilweise aus der Aufnahme herausragende Speichereinheit drückt, so dass ein Lösen der Arretierungseinheit bewirkt wird und anschließend die Speichereinheit aus der Aufnahme herausgezogen werden kann. Ein Lösen der Speichereinheit kann auch durch einen am Gehäuse angeordneten, mit dem Haltemittel verbundenen Schalter erfolgen.

Eine weitere vorteilhafte Ausgestaltung der Erfindung sieht vor, dass der Identifikationsgeber ein kombinierter mechanischer und elektronischer Schlüssel ist. Der mechanische Schlüssel kann in eine Ruhelage und in eine Arbeitslage bringbar sein, wobei erfindungsgemäß der Schlüssel in seiner Ruhelage die Aufnahme vollständig verdeckt. Die in der Aufnahme sich befindende Speichereinheit ist somit durch den mechanischen Schlüssel in seiner Ruhelage geschützt, so dass ein Herausfallen der Speichereinheit ausgeschlossen ist. Der mechanische Schlüssel ist zweckmäßigerweise drehbar am Gehäuse gelagert.

Vorzugsweise weist das Gehäuse ein Schließelement auf, welches die Aufnahme verdeckt. Bei dieser Ausgestaltungsmöglichkeit der Erfindung befindet sich die Speichereinheit in der Aufnahme, wobei das Schließelement komplett die Speichereinheit von der Umgebung verschließt. Als Schließelement ist beispielsweise eine Klappe denkbar, die aufgeschoben oder aufgeklappt werden kann, und im geöffneten Zustand die Speichereinheit in die Aufnahme geführt werden kann. Weitere Ausführungsformen des Schließelementes sind ebenfalls denkbar.

Zweckmäßigerweise umfasst der Identifikationsgeber ein Anzeigeelement. Das Anzeigeelement kann beispielsweise eine LED-Leuchte sein oder ein Display, welches an der Oberfläche des Gehäuses angeordnet ist. Das Anzeigeelement kann hierbei unterschiedliche Funktionen aufweisen. Beispielsweise ist es möglich, über das Anzeigelement den aktuellen Schließstatus des Kraftfahrzeuges anzuzeigen. Eine rotblinkende LED kann beispielsweise ein geschlossenes und eine grünblinkende LED ein geöffnetes Kraftfahrzeug anzeigen. Das Display kann vorzugsweise als organische Leuchdiode (OLED) ausgebildet sein, die halbleitende Polymere oder kleine Moleküle aufweisen kann. Der große Vorteil einer OLED ist, dass sie ohne Hintergrundbeleuchtung auskommen kann. Dieses Display benötigt deutlich weniger Energie und kann besonders gut bei einem derartig kleinen Identifikationsgeber eingesetzt werden. Vorteilhafterweise ist dieses Display in Form einer Plastik-Folie sehr dünn ausgebildet und kann aufgrund seiner biegsamen Materialeigenschaft entlang der Kontur des Gehäuses des Identifikationsgebers befestigt sein. Des Weiteren kann das Display gleichzeitig als Aktivierungsfläche in Form eines Touchscreens dienen.

Vorzugsweise ist die Aufnahme eine Standardschnittstelle im Identifikationsgeber ausgebildet. Die Speichereinheit kann einen integrierten Controller aufweisen. Bei der Speichereinheit kann es sich beispielsweise um eine CF-, MMC-, SD-, RS MMC-, Mini SD oder Trans Flash Card handeln oder um einen MStick. Selbstverständlich kann es sich bei der Speichereinheit auch um eine Karte ohne integriertem Controller, wie eine SM-Karte, handeln. Der besondere Vorteil einer Karte mit integriertem Controller ist, dass die Steuerelektronik für den Speicher, direkt auf der Karte verankert ist, so dass eine Abhängigkeit von der Kapazitätsvorgabe des elektronischen Identifikationsgebers nicht besteht.

Zweckmäßigerweise ist der Identifikationsgeber mit einer Zusatzschnittstelle ausgeführt, die von einer abnehmbaren Kappe vollständig abgedeckt ist. Der Vorteil einer derartigen Ausgestaltung ist, dass zum Einlesen und/oder Auslesen der Daten die Speichereinheit aus der Aufnahme nicht entfernt werden muss. Hier genügt es, den Identifikationsgeber über seine Zusatzschnittstelle mit dem Computer oder mit der fahrzeugseitigen Einheit zu verbinden. Die Zusatzschnittstelle ist vorzugsweise mit der Aufnahme, der Dateneinheit und der identifikationsgeberseitigen Sende- und Empfangseinheit leitend verbunden.

Die Aufgabe der vorliegenden Erfindung wird ferner mit einem mobilen Identifikationsgeber mit den Merkmalen des Anspruchs 18 gelöst. Im abhängigen Anspruch 19 sind bevorzugte Weiterbildungen ausgeführt.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmalen jeweils einzeln für sich oder in beliebiger Kombination erfindungswesentlich sein. Es zeigen:
- Figur 1: eine rein schematische Darstellung des erfindungsgemäßen Systems mit einem Kraftfahrzeug,
- Figur 2: einen Identifikationsgeber, der ein kombinierter, mechanischer und elektri- scher Schlüssel ist, und
- Figur 3: eine weitere Ausführungsform eines keyless-go Identifikationsgebers.

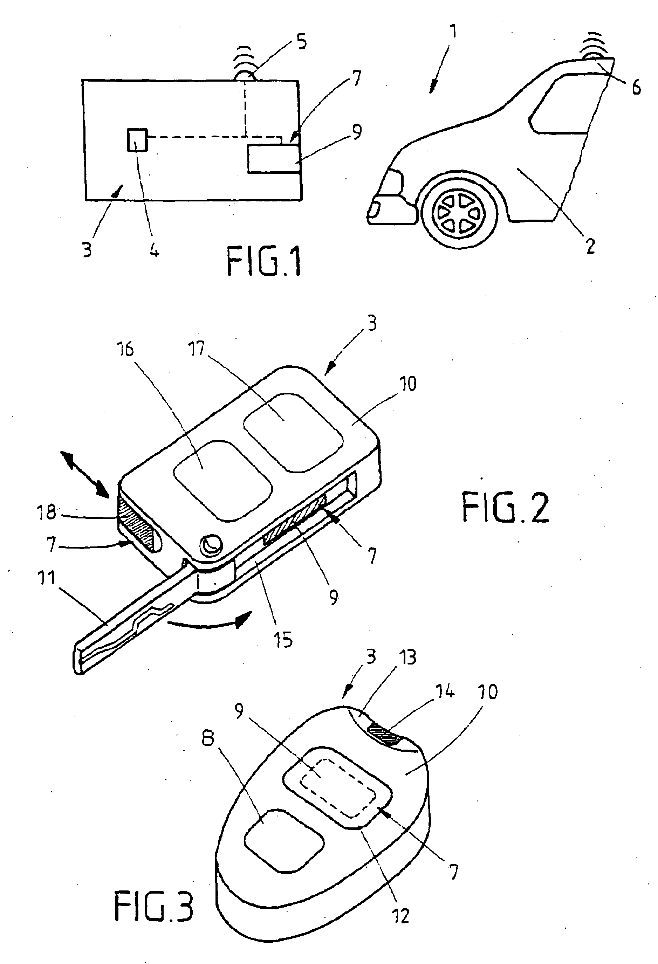

Figur 1 zeigt das erfindungsgemäße System 1 für eine schlüssellose Aktivierung einer Schließvorrichtung eines Kraftfahrzeuges 2. Unter der Aktivierung kann gleichzeitig ein vorgeschaltetes Zugangskontrollverfahren verstanden werden. Hierbei weist das System 1 einen mobilen Identifikationsgeber 3 auf, der eine Dateneinheit 4 enthält, die gespeicherte Identifikationsdaten umfasst. Diese Identifikationsdaten werden für die Aktivierung der Schließvorrichtung des Kraftfahrzeuges 2 über eine Sende- und Empfangseinheit 5 an die am Kraftfahrzeug 2 angeordnete Sende- und Empfangseinheit 6 per Funk gesendet. Aufgrund einer bidirektionalen Kommunikation zwischen dem Identifikationsgeber 3 und einer nicht dargestellten Steuereinheit im Kraftfahrzeug 2, die mit der Sende- und Empfangseinheit 6 verbunden ist, wird ein Öffnungsvorgang und/oder Schließvorgang der Schließvorrichtung des Kraftfahrzeuges 2 aktiviert. Die Identifikationsdaten in der Dateneinheit 4 müssen hierbei keine festen Daten sein. Diese können in einer möglichen Ausführungsform des Systems 1 auch neu generiert werden.

Wie Figur 1 schematisch zeigt, ist der Identifikationsgeber 3 mit einer Aufnahme 7 ausgeführt, die eine herausnehmbare Speichereinheit 9 innerhalb des Gehäuses 3 zuverlässig hält. Bei der Speichereinheit 9 handelt es sich im vorliegenden Ausführungsbeispiel um eine MMC-Card. Die Speichereinheit 9 ist über eine elektrische Verbindung mit der Sende- und Empfangseinheit 5 verbunden. Die Dateneinheit 4 weist ebenfalls mit der Sende- und Empfangseinheit 5 und der Speichereinheit 9 eine elektrische Verbindung auf. Im dargestellten Ausführungsbeispiel ist die Aufnahme 7 als Standardschnittstelle ausgeführt. Die Dateneinheit 4 ist hingegen fest innerhalb des Gehäuses 3 befestigt.

Befindet sich der Benutzer mit dem Identifikationsgeber 3 innerhalb des Kraftfahrzeuges 2, kann ein Datentransfer mit einem Navigationssystem, einem Diagnosesystem, einem Multimediagerät, einem Organizer oder einem Motormanagementsystems, die innerhalb des Kraftfahrzeuges 2 angeordnet sind, erfolgen. Der Datentransfer kann kabellos - beispielsweise per bluetooth - erfolgen. Ferner ist es selbstverständlich möglich, die Speichereinheit 9 aus der Aufnahme 7 herauszuziehen und in eine entsprechende Schnittstelle des jeweiligen Gerätes einzuschieben, um eine Datenverbindung herzustellen.

Figur 2 zeigt eine weitere Ausführungsform der Erfindung, in der ein keyless-entry Identifikationsgeber 3 als ein kombinierter, mechanischer und elektronischer Schlüssel ausgebildet ist. Der mechanische Schlüssel 11 ist drehbar am Gehäuse 10 gelagert, wobei der mechanische Schlüssel 11 zwei Positionen einnehmen kann. In der dargestellten Ausführungsform befindet sich der mechanische Schlüssel 11 in seiner Arbeitslage. Wird der Schlüssel 11 gemäß des Pfeils in Figur 2 um 180° geschwenkt, befindet sich der Schlüssel 11 in seiner Ruhelage. Dort wird der mechanische Schlüssel 11 durch die seitlich am Gehäuse 10 verlaufende Nut 15 aufgenommen. In der Nut 15 ist eine schlitzförmige Aufnahme 7 ausgebildet, in die die Speichereinheit 9 eingeführt ist. In der Ruhelage des Schlüssels 11 ist die in der Aufnahme 7 sich befindende Speichereinheit 9 vollständig durch den Schlüssel 11 abgedeckt. Auf der Oberseite sind zwei Tastelemente 16, 17 positioniert, die durch Betätigung eine Aktivierung der Schließvorrichtung innerhalb des Kraftfahrzeuges 2 hervorrufen können.

Alternativ kann die Aufnahme 7 an der Vorderseite des Gehäuses 10 angeordnet sein. Durch ein am Gehäuse 10 angeordnetes Schiebeelement 18, das in der dargestellten Pfeilrichtung bewegt werden kann, ist die nicht sichtbare Speichereinheit 9 zuverlässig innerhalb des Identifikationsgebers 3 angeordnet.

Figur 3 zeigt einen keyless-go Identifikationsgeber 3, der an der Unterseite ein Schließelement 12 aufweist, welches die in der Aufnahme 7 angeordnete Speichereinheit 9 verdeckt. Das Schließelement 12 kann im vorliegenden Ausführungsbeispiel an einer Seite aufgeklappt werden, wobei in Schließstellung das Schließelement 12 zuverlässig am Gehäuse 10 eingerastet ist. Ferner weist der Identifikationsgeber 3 ein Display 8 auf, welches mit einer innerhalb des Identifikationsgebers 3 positionierten, nicht dargestellten Batterie verbunden ist. Im vorliegenden Ausführungsbeispiel ist das Display 8 eine OLED. Des Weiteren ist der Identifikationsgeber 3 mit einer Zusatzschnittstelle 14 ausgeführt, die durch eine Kappe 13 verdeckbar ist. Die Zusatzschnittstelle 14, die im Ausführungsbeispiel als USB-Schnittstelle ausgeführt ist, ist mit der Speichereinheit 9 elektrisch verbunden, so dass für einen etwaigen Datenaustausch es nicht unbedingt notwendig ist, die Speichereinheit 9 aus der Aufnahme 7 zu entnehmen.

Die in Figur 2 und in Figur 3 dargestellten Identifikationsgeber 3 sind des Weiteren mit einer Sende- und Empfangseinheit 5 ausgestattet, die nicht explizit dargestellt sind.

### Bezugszeichenliste

- **1**: System
- **2**: Kraftfahrzeug
- **3**: Identifikationsgeber
- **4**: Dateneinheit
- **5**: Sende- und Empfangseinheit (Identifikationsgeber)
- **6**: Sende- und Empfangseinheit (Kraftfahrzeug)
- **7**: Aufnahme
- **8**: Display
- **9**: Speichereinheit
- **10**: Gehäuse
- **11**: Schlüssel (mechanisch)
- **12**: Schließelement
- **13**: Kappe
- **14**: Zusatzschnittstelle
- **15**: Nut
- **16**: Tastelement
- **17**: Tastelement
- **18**: Schiebeelement

## Patentansprüche

1. System (1) für eine schlüssellose Aktivierung einer Schlleßvorrichtung eines Kraftfahrzeuges (2), mit einem mobilen Identifikationsgeber (3), der eine Dateneinheit (4) mit gespeicherten Identifikationsdaten und eine Sende- und Empfangseinheit (5) aufweist, die mit einer kraftfahrzeugseitigen Sende- und Empfangseinheit (6) in eine bldlrektlonale Kommunikation bringbar ist, um einen Öffnung- oder Schließvorgang der Schließvorrichtung zu aktivieren,
**dadurch gekennzeichnet,**
**dass** die Dateneinheit (4) fest innerhalb des Identifikationsgebers (3) befestigt ist, der eine Aufnahme (7) aufweist, in der zusätzlich eine austauschbare Speichereinheit (9) zum Ein- und Auslesen von allgemeinen Daten angeordnet ist.

2. System (1) nach Anspruch 1,
**dadurch gekennzeichnet,**
**dass** die Speichereinheit (9) in Verbindung mit der identifikationsgeberseitigen Sende- und Empfangseinrichtung (5) steht.

3. System (1) nach Anspruch 1 oder 2,
**dadurch gekennzeichnet,**
**dass** anstelle eines Notschlüssels, der in einem keyless-go Identifikationsgeber (3) angeordnet Ist, die Aufnahme (7) für die Speichereinheit (9) vorgesehen ist.

4. System (1) nach einem der vorhergehenden Ansprüche,
**dadurch gekennzeichnet,**
**dass** der Identifikationsgeber (3) ein Gehäuse (10) umfasst, wobei die Aufnahme (7) schlitzförmig im Gehäuse (10) ausgeführt ist, so dass zumindest teilweise die Speichereinheit (9) in der Aufnahme (7) eingeschoben ist.

5. System (1) nach einem der vorhergehenden Ansprüche,
**dadurch gekennzeichnet,**
**dass** die Aufnahme (7) Haltemittel umfasst, die ein Lösen der Speichereinheit (9) aus der Aufnahme (7) verhindern.

6. System (1) nach Anspruch 5,
**dadurch gekennzeichnet,**
**dass** das Haltemittel als eine Arretierungseinheit ausgebildet ist, die mit der Speichereinheit (9) derart zusammenwirkt, dass die Speichereinheit (9) In der Aufnahme (7) einrastet.

7. System (1) nach einem der vorhergehenden Ansprüche,
**dadurch gekennzeichnet,**
**dass** der Identifikationsgeber (3) ein kombinierter mechanischer und elektronischer Schlüssel ist.

8. System (1) nach einem der vorhergehenden Ansprüche,
**dadurch gekennzeichnet,**
**dass** der mechanische Schlüssel (11) drehbar gelagert am Gehäuse (10) angeordnet ist, der in eine Ruhelage und in eine Arbeitslage bringbar ist, wobei der Schlüssel (11) in seiner Ruhelage die Aufnahme (7) verdeckt.

9. System (1) nach einem der vorhergehenden Ansprüche,
**dadurch gekennzeichnet,**
**dass** das Gehäuse (10) ein Schließelement (12) aufweist, welches die Aufnahme (7) verdeckt.

10. System (1) nach einem der vorhergehenden Ansprüche,
**dadurch gekennzeichnet,**
**dass** der Identifikationsgeber (3) ein Display (8) umfasst.

11. System (1) nach Anspruch 10,
**dadurch gekennzeichnet,**
**dass** das Display (8) OLEDs aufweist.

12. System (1) nach einem der vorhergehenden Ansprüche,
**dadurch gekennzeichnet,**
**dass** die Speichereinheit (9) einen integrierten Controller aufweist.

13. System (1) nach einem der vorhergehenden Ansprüche,
**dadurch gekennzeichnet,**
**dass** die Speichereinheit (9) in Datenkommunikation mit einer fahrzeugseitigen Einheit, insbesondere mit einem Navigationssystem, einem Diagnosesystem, einem Multimediagerät, einem Organizersystem oder einem Motormanagementsystem steht.

14. System (1) nach Anspruch 13,
**dadurch gekennzeichnet,**
**dass** die Datenkommunikation der Speichereinheit (9) optisch, Induktiv, mittels Funk oder mittels elektrischen Kontakts erfolgt.

15. System (1) nach einem der vorhergehenden Ansprüche,
**dadurch gekennzeichnet,**
**dass** in der Speichereinheit (9) Daten zur Navigation, Musikdaten, persönliche Fahrereinstellungsdaten, Fahrzeugzustandsdaten sowie allgemeine Daten speicherbar sind.

16. System (1) nach einem der vorhergehenden Ansprüche,
**dadurch gekennzeichnet,**
**dass** die Aufnahme (7) eine Standardschnittstelle ist, die eine elektrische Verbindung zur Informationsübermittiung zwischen der Speichereinheit (9) und der Sende- und Empfangseinheit (5) herstellt.

17. System (1) nach einem der vorhergehenden Ansprüche,
**dadurch gekennzeichnet,**
**dass** der Identifikationsgeber (3) mit einer Zusatzschnittstelle (14) ausgeführt Ist, die von einer abnehmbaren Kappe (13) vollständig abgedeckt ist.

18. Mobiler Identifikationsgeber (1) für eine schlüssellose Aktivierung einer Schileßvorrichtung eines Kraftfahrzeuges (2), der eine Dateneinheit (4) mit gespeicherten Identifikationsdaten und eine Sende- und Empfangseinheit (4) aufweist, die mit einer kraftfahrzeugseitigen Sende- und Empfangseinheit (6) In eine bidirektionale Kommunikation bringbar Ist, um einen Öffnungs- oder Schließvorgang der Schließvorrichtung zu aktivieren, wobei die Dateneinheit (4) fest innerhalb des Identifikationsgebers (3) befestigt ist, der eine Aufnahme (7) aufweist, in der zusätzlich eine austauschbare Speichereinheit (9) zum Ein- und Auslesen von allgemeinen Daten anordenbar ist.

19. Mobiler Identifikationsgeber (3) nach Anspruch 18, wie in einem System nach einem der vorhergehenden Ansprüche.

20. Kraftfahrzeug (2) mit einem mobilen Identifikationsgeber (3) nach Anspruch 18 oder 19.

## Claims

1. A system (1) for a keyless activation of a locking device of a motor vehicle (2), with a mobile identifier (3) which has a data unit (4) with saved identification data and a transmitting and receiving unit (5), which can be brought into bidirectional communication with a transmitting and receiving unit (6) at the motor vehicle in order to activate an opening or locking process of the locking device,
**characterised in that**
the data unit (4) is firmly fixed inside the identifier (3), which has a receptacle (7) in which additionally there is arranged a replaceable memory unit (9) for reading general data in and out.

2. The system (1) according to Claim 1,
**characterised in that**
the memory unit (9) is connected to the transmitting and receiving unit (5) at the identifier.

3. The system (1) according to claim 1 or 2,
**characterised in that**
the receptacle (7) for the memory unit (9) is provided instead of an emergency key, which is arranged in a keyless-go identifier (3).

4. The system (1) according to one of the preceding claims,
**characterised in that**
the identifier (3) includes a casing (10), whereby the receptacle (7) is designed in a slot-shaped manner in the casing (10), such that the memory unit (9) is at least partly inserted into the receptacle (7).

5. The system (1) according to one of the preceding claims,
**characterised in that**
the receptacle (7) includes retaining means which prevent the memory unit (9) from coming loose from the receptacle (7).

6. The system (1) according to Claim 5,
**characterised in that**
the retaining means is configured as a detent unit which interacts with the memory unit (9) such that the memory unit (9) engages in the receptacle (7).

7. The system (1) according to one of the preceding claims,
**characterised in that**
the identifier (3) is a combined mechanical and electronic key.

8. The system (1) according to one of the preceding claims,
**characterised in that**
the mechanical key (11) is arranged at the casing (10) in a rotatably borne manner, which key can be brought into a rest position and into a work position, wherein the key (11), in its rest position, covers the receptacle (7).

9. The system (1) according to one of the preceding claims,
**characterised in that**
the casing (10) has a locking member (12) which covers the receptacle (7).

10. The system (1) according to one of the preceding claims,
**characterised in that**
the identifier (3) includes a display (8).

11. The system (1) according to Claim 10,
**characterised in that**
the display (8) has OLEDs.

12. The system (1) according to one of the preceding claims,
**characterised in that**
the memory unit (9) has an integrated controller.

13. The system (1) according to one of the preceding claims,
**characterised in that**
the memory unit (9) is in data communication with a unit at the vehicle, in particular with a navigation system, a diagnostic system, a multimedia appliance, an organiser system or a motor management system.

14. The system (1) according to Claim 13,
**characterised in that**
the data communication of the memory unit (9) takes place optically, inductively, by means of radio or by means of electrical contact.

15. The system (1) according to one of the preceding claims,
**characterised in that**
data for navigation, music data, personal driver settings data, motor vehicle status data as well as general data can be saved in the memory unit (9).

16. The system (1) according to one of the preceding claims,
**characterised in that**
the receptacle (7) is a standard interface which creates an electrical connection for transmitting information between the memory unit (9) and the transmitting and receiving unit (5).

17. The system (1) according to one of the preceding claims,
**characterised in that**
the identifier (3) is designed with an additional interface (14), which is completely covered by a detachable cap (13).

18. A mobile identifier (3) for a keyless activation of a locking device of a motor vehicle (2), which identifier (3) has a data unit (4) with saved identification data and a transmitting and receiving unit (5), which can be brought into bidirectional communication with a transmitting and receiving unit (6) at the motor vehicle, in order to activate an opening or locking process of the locking device, whereby the data unit (4) is firmly fixed inside the identifier (3), which has a receptacle (7) in which additionally there can be arranged a replaceable memory unit (9) for reading general data in and out.

19. The mobile identifier (3) according to Claim 18, as in a system according to one of the preceding claims.

20. A motor vehicle (2) with a mobile identifier (3) according to Claim 18 or 19.

## Revendications

1. Système (1) pour l'activation sans clé d'un dispositif de verrouillage de véhicule automobile (2), équipé d'un transmetteur mobile d'identification (3) comprenant une unité (4) de gestion de données dans laquelle des données d'identification sont stockées, et une unité (5) d'émission et de réception pouvant être mise en communication bidirectionnelle avec une unité (6) d'émission et de réception, solidaire du véhicule automobile, de manière à activer un processus d'ouverture ou de fermeture dudit dispositif de verrouillage,
**caractérisé par le fait**
**que** l'unité (4) de gestion de données est fixée rigidement à l'intérieur du transmetteur d'identification (3) qui est pourvu d'un logement (7) dans lequel une unité remplaçable de mémorisation (9) est additionnellement placée, en vue de l'introduction et de l'extraction de données générales.

2. Système (1) selon la revendication 1,
**caractérisé par le fait**
**que** l'unité de mémorisation (9) est en liaison avec l'unité (5) d'émission et de réception, solidaire du transmetteur d'identification.

3. Système (1) selon la revendication 1 ou 2,
**caractérisé par le fait**
**que** le logement (7), affecté à l'unité de mémorisation (9), est prévu à la place d'une clé de secours située dans un transmetteur d'identification (3) du type à fonctionnement direct sans clé.

4. Système (1) selon l'une des revendications précédentes,
**caractérisé par le fait**
**que** le transmetteur d'identification (3) offre un boîtier (10), le logement (7) étant ménagé sous la forme d'une fente, dans ledit boîtier (10), de façon telle que l'unité de mémorisation (9) soit insérée, au moins en partie, dans ledit logement (7).

5. Système (1) selon l'une des revendications précédentes,
**caractérisé par le fait**
**que** le logement (7) comporte des moyens de retenue empêchant l'unité de mémorisation (9) de se dissocier d'avec ledit logement (7).

6. Système (1) selon la revendication 5,
**caractérisé par le fait**
**que** le moyen de retenue est réalisé sous la forme d'une unité d'arrêt coopérant avec l'unité de mémorisation (9), de telle manière que ladite unité de mémorisation (9) s'encliquette dans le logement (7).

7. Système (1) selon l'une des revendications précédentes,
**caractérisé par le fait**
**que** le transmetteur d'identification (3) est une clé combinée, mécanique et électronique.

8. Système (1) selon l'une des revendications précédentes,
**caractérisé par le fait**
**que** la clé mécanique (11), implantée sur le boîtier (10) avec montage rotatif, peut être amenée à une position de repos et à une position opérante, ladite clé (11) occultant le logement (7) dans sa position de repos.

9. Système (1) selon l'une des revendications précédentes,
**caractérisé par le fait**
**que** le boîtier (10) est muni d'un élément d'obturation (12) qui occulte le logement (7).

10. Système (1) selon l'une des revendications précédentes,
**caractérisé par le fait**
**que** le transmetteur d'identification (3) comporte un affichage (8).

11. Système (1) selon la revendication 10,
**caractérisé par le fait**
**que** l'affichage (8) présente des diodes électroluminescentes organiques.

12. Système (1) selon l'une des revendications précédentes,
**caractérisé par le fait**
**que** l'unité de mémorisation (9) est pourvue d'un dispositif de commande intégré.

13. Système (1) selon l'une des revendications précédentes,
**caractérisé par le fait**
**que** l'unité de mémorisation (9) est en communication d'échange de données avec une unité solidaire du véhicule, notamment avec un système de navigation, un système de diagnostics, un appareil multimédia, un système d'organisation ou un système de gestion du moteur.

14. Système (1) selon la revendication 13,
**caractérisé par le fait**
**que** la communication d'échange de données de l'unité de mémorisation (9) s'opère en mode optique, en mode inductif, par radio ou par contact électrique.

15. Système (1) selon l'une des revendications précédentes,
**caractérisé par le fait**
**que** des données de navigation, des données musicales, des données propres aux réglages personnels effectués par le conducteur, des données d'état du véhicule, ainsi que des données générales, peuvent être stockées dans l'unité de mémorisation (9).

16. Système (1) selon l'une des revendications précédentes,
**caractérisé par le fait**
**que** le logement (7) est un interface standard, établissant une liaison électrique en vue de la transmission d'informations entre l'unité de mémorisation (9) et l'unité (5) d'émission et de réception.

17. Système (1) selon l'une des revendications précédentes,
**caractérisé par le fait**
**que** le transmetteur d'identification (3) est réalisé muni d'un interface additionnel (14), intégralement recouvert par un capuchon amovible (13).

18. Transmetteur mobile d'identification (3) dédié à une activation, sans clé, d'un dispositif de verrouillage de véhicule automobile (2), ledit transmetteur étant équipé d'une unité (4) de gestion de données dans laquelle des données d'identification sont stockées, et d'une unité (5) d'émission et de réception pouvant être mise en communication bidirectionnelle avec une unité (6) d'émission et de réception, solidaire du véhicule automobile, de manière à activer un processus d'ouverture ou de fermeture dudit dispositif de verrouillage, ladite unité (4) de gestion de données étant fixée rigidement à l'intérieur dudit transmetteur d'identification (3) qui est pourvu d'un logement (7) dans lequel une unité remplaçable de mémorisation (9) peut être additionnellement placée, en vue de l'introduction et de l'extraction de données générales.

19. Transmetteur mobile d'identification (3) selon la revendication 18, du type équipant un système selon l'une des revendications précédentes.

20. Véhicule automobile (2) équipé d'un transmetteur mobile d'identification (3) selon la revendication 18 ou 19.
